# EUROPEAN PATENT APPLICATION

(11) **EP 4 435 470 A1**
(43) Date of publication of application: **25.09.2024**
(21) Application number: 22895695.9
(22) Date of filing: 18.11.2022
(51) Int. Cl.: G01S 7/497, G01C 3/06

(54) **RANGE MEASURING DEVICE, MODEL GENERATION DEVICE, INFORMATION GENERATION DEVICE, INFORMATION GENERATION METHOD, AND PROGRAM**

(30) Priority: 18.11.2021 JP 2021187617
(71) Applicant: Pioneer Corporation, Tokyo 113-0021 (JP); Pioneer Smart Sensing Innovations Corporation, Tokyo 113-0021 (JP)
(72) Inventor: HOSOI Kenichiro, Kawagoe-shi, Saitama 350-8555 (JP)
(74) Representative: Vossius & Partner Patentanwälte Rechtsanwälte mbB
(86) International application number: PCT/JP2022/042825
(87) International publication number: WO 2023/090414

(57) **Abstract**

An example of a problem to be solved by the present invention is to specify an influence on a distance measurement property of an attached-matter formed on an emission window of a distance measurement apparatus. A distance measurement apparatus (10) of the present invention is an apparatus that emits light output from a light source (14) through a transmissive member (20) and detects reflection light from a target object. The distance measurement apparatus (10) includes a light receiving unit (180) and an information generation unit (121). The light receiving unit (180) receives at least internal reflection light including reflection light reflected by the transmissive member (20). The information generation unit (121) generates information on the distance measurement property of the distance measurement apparatus (10) by using a light reception result of the internal reflection light by the light receiving unit (180).

## Description

### TECHNICAL FIELD

The present invention relates to a distance measurement apparatus, a model generation apparatus, an information generation apparatus, an information generation method, and a program.

### BACKGROUND ART

In recent years, development of distance measurement apparatuses that can be used for autonomous driving of an automobile and the like has been performed. An example of the distance measurement apparatus includes a distance measurement apparatus that measures a distance to a surrounding object by measuring a time it takes for emitted light to be reflected by the object and return.

In such a distance measurement apparatus, the presence of an attached-matter on an emission window, through which the light is emitted, affects the distance measurement.

Patent Document 1 describes monitoring a light reception power of light and operating a window cleaning device when it is necessary to remove stains and the like from a window part.

### RELATED DOCUMENT

### PATENT DOCUMENT

Patent Document 1: PCT Japanese Translation Patent Publication No. 2009-503486

### SUMMARY OF THE INVENTION

### TECHNICAL PROBLEM

The influence of the attached-matter on a distance measurement property also differs depending on a configuration of the distance measurement apparatus. By specifying what kind of influence occurs in the distance measurement, it is possible to take appropriate measures.

An example of a problem to be solved by the present invention is to specify an influence on a distance measurement property of an attached-matter formed on an emission window of a distance measurement apparatus.

### SOLUTION TO PROBLEM

According to the invention described in claim 1, there is provided a distance measurement apparatus that emits light output from a light source through a transmissive member and detects reflection light from a target object, the distance measurement apparatus including: a light receiving unit that receives at least internal reflection light including reflection light reflected by the transmissive member; and an information generation unit that generates information on a distance measurement property of the distance measurement apparatus by using a light reception result of the internal reflection light by the light receiving unit.

According to the invention described in claim 12, there is provided a model generation apparatus including: a training data acquisition unit that acquires training data in which a light reception result of receiving internal reflection light including reflection light reflected by a transmissive member by a light receiving unit, in a distance measurement apparatus that emits light output from a light source through the transmissive member and detects reflection light from a target object, and information on a distance measurement property of the distance measurement apparatus are associated with each other; and a model generation unit that generates a model to which the light reception result of the internal reflection light is to be input and from which the information on the distance measurement property is to be output, by performing machine learning with the training data.

According to the invention described in claim 13, there is provided an information generation apparatus that generates information on a distance measurement property of a distance measurement apparatus that emits light output from a light source through a transmissive member and detects reflection light from a target object, the information generation apparatus including: an information generation unit that generates the information on the distance measurement property of the distance measurement apparatus by using a light reception result of internal reflection light including reflection light reflected by the transmissive member by a light receiving unit that receives at least the internal reflection light.

According to the invention according to claim 14, there is provided an information generation method that is executed by a computer to generate information on a distance measurement property of a distance measurement apparatus that emits light output from a light source through a transmissive member and detects reflection light from a target, the method including: generating the information on the distance measurement property of the distance measurement apparatus by using a light reception result of internal reflection light including reflection light reflected by the transmissive member by a light receiving unit that receives at least the internal reflection light.

According to the invention described in claim 15, there is provided a program for causing a computer to function as: the information generation apparatus according to claim 13.

### BRIEF DESCRIPTION OF THE DRAWINGS

Fig. 1 is a diagram illustrating a configuration of a distance measurement apparatus according to a first embodiment.
Fig. 2 is a diagram illustrating the distance measurement apparatus according to the first embodiment.
Fig. 3 is a diagram illustrating in detail the configuration of the distance measurement apparatus according to the first embodiment.
Fig. 4 is a diagram illustrating a hardware configuration of a control unit and an information generation unit according to the first embodiment.
Fig. 5 is a diagram illustrating a reception light signal waveform of internal reflection light in a case where an attached-matter occurs on a transmissive member.
Fig. 6 is a diagram illustrating another reception light signal waveform of the internal reflection light in the case where the attached-matter occurs on the transmissive member.
Fig. 7 is a diagram schematically illustrating a distribution of an internal reflection light intensity within a frame.
Fig. 8 is a table illustrating a determination rule for generating distance measurement property information from a light reception result of the internal reflection light.
Fig. 9 is a flowchart illustrating a flow of determination of an information generation unit in a case where the determination rule of Fig. 8 is used.
Fig. 10A is a diagram schematically illustrating a transmissive member of a distance measurement apparatus to which a telephoto lens is not attached, and Fig. 10B and Fig. 10C are diagrams schematically illustrating a transmissive member of a distance measurement apparatus to which the telephoto lens is attached.
Fig. 11 is a diagram illustrating a result of measurement in a state in which an attached-matter is attached to the transmissive member of the distance measurement apparatus to which the telephoto lens is not attached.
Fig. 12 is a diagram illustrating a result of measurement in a state in which an attached-matter is attached to the transmissive member of the distance measurement apparatus to which the telephoto lens is attached.
Fig. 13 is a diagram illustrating an image in which a distance measurement property map is displayed.
Fig. 14 is a flowchart illustrating a flow of an information generation method according to the first embodiment.
Fig. 15 is a diagram illustrating a trained model used by an information generation unit according to a second embodiment.
Fig. 16 is a block diagram illustrating a functional configuration of an apparatus that generates a model.
Fig. 17 is a block diagram illustrating a functional configuration of a distance measurement apparatus according to a fourth embodiment.
Fig. 18 is a diagram describing a notification subject region.
Fig. 19 is a block diagram illustrating a configuration of an information generation apparatus according to a fifth embodiment.
Fig. 20 is a diagram illustrating a hardware configuration of the information generation apparatus according to the fifth embodiment.

### DESCRIPTION OF EMBODIMENTS

Hereinafter, embodiments according to the present invention will be described by using the drawings. In all of the drawings, the same components are denoted by the same reference numerals, and description thereof is not repeated as appropriate.

### (First Embodiment)

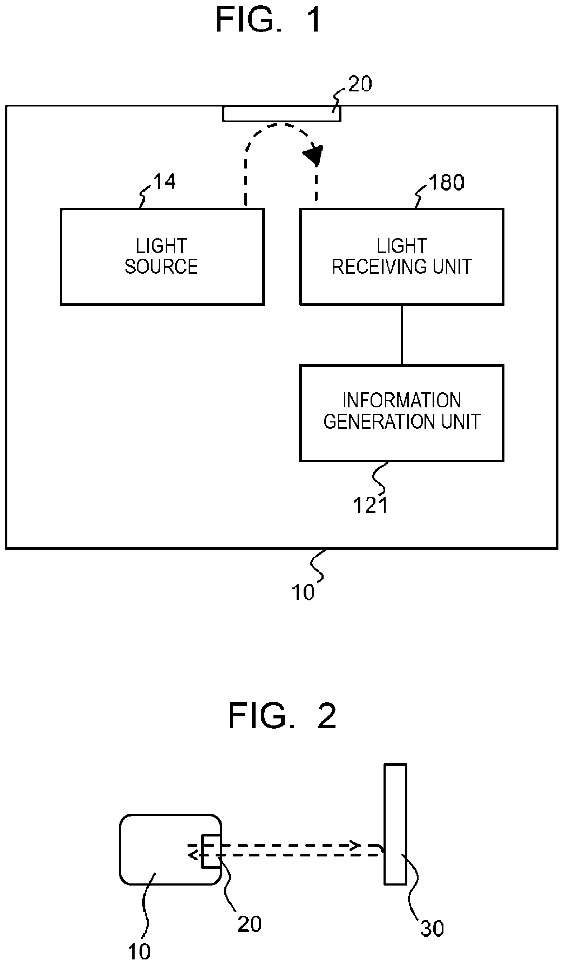

Fig. 1 is a diagram illustrating a configuration of a distance measurement apparatus 10 according to a first embodiment. Fig. 2 is a diagram illustrating the distance measurement apparatus 10 according to the present embodiment.

In Figs. 1 and 2, broken line arrows schematically indicate paths of light. The distance measurement apparatus 10 according to the present embodiment is an apparatus that emits light output from a light source 14 through a transmissive member 20 and detects reflection light from a target object 30. The distance measurement apparatus 10 includes a light receiving unit 180 and an information generation unit 121. The light receiving unit 180 receives at least internal reflection light including reflection light reflected by the transmissive member 20. The information generation unit 121 generates information on a distance measurement property of the distance measurement apparatus 10 (hereinafter, referred to as "distance measurement property information") by using a light reception result of the internal reflection light by the light receiving unit 180. Details will be described below.

The distance measurement apparatus 10 emits light output from a light source 14 to an outside of the distance measurement apparatus 10 mainly through the transmissive member 20 as illustrated in Fig. 2. Meanwhile, at least a part of the light output from the light source 14 is reflected inside the distance measurement apparatus 10 as illustrated in Fig. 1, and becomes internal reflection light. The internal reflection light is received by the light receiving unit 180. This internal reflection light also includes the light reflected by the transmissive member 20. In addition, in a case where attached-matter exists at the transmissive member 20, reflection light caused by the attached-matter is included in the internal reflection light.

The transmissive member 20 is a light transmissive member that partitions an inside and the outside of the distance measurement apparatus 10. The transmissive member 20 is made of, for example, glass or resin. At least one surface of the transmissive member 20 is exposed to an external space of the distance measurement apparatus 10, and stains, raindrops, and the like may adhere to the surface. The reflection light caused by the attached-matter includes, for example, light reflected at an interface between the transmissive member 20 and the attached-matter, light reflected inside the attached-matter, and light reflected at an interface between the attached-matter and air. The information generation unit 121 can generate distance measurement property information by using the light reception result of the internal reflection light. The distance measurement property information is, for example, information indicating a distance measurement performance, and is information on a reception light intensity of the reflection light from the target object 30 or a distance measurement limit distance. Specifically, the distance measurement property information may be deterioration information indicating the degree of deterioration of the distance measurement performance with respect to a reference state. Meanwhile, the distance measurement property information may indicate information indicating a level of the distance measurement performance. The target object 30 is not an attached-matter to the transmissive member 20, that is, an object not in contact with the transmissive member 20.

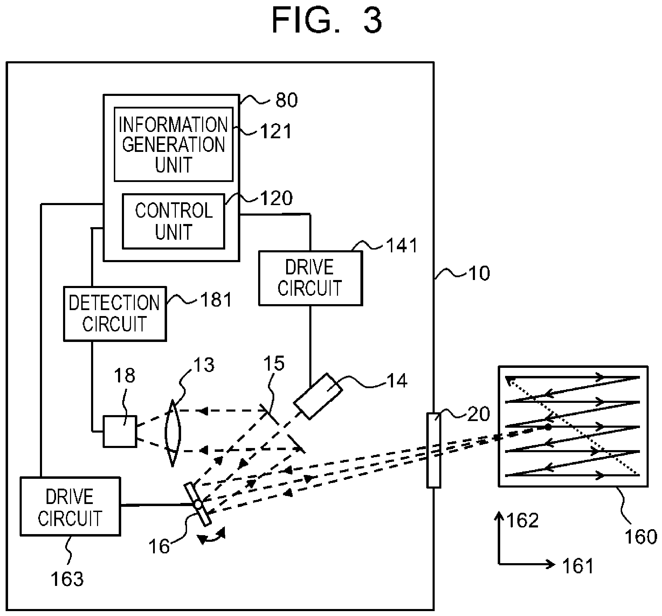

Fig. 3 is a diagram illustrating in detail the configuration of the distance measurement apparatus 10 according to the present embodiment. In this diagram, a broken line arrow schematically indicates a path of light. The configuration of the distance measurement apparatus 10 will be described in detail with reference to this diagram.

The distance measurement apparatus 10 is an apparatus that measures a distance from the distance measurement apparatus 10 to an object (target object 30) located within a scanning range 160 based on, for example, a difference between an emission timing of pulsed-light and a light reception timing of reflection light (reflected pulsed-light). The pulsed-light is light such as infrared light, for example. In addition, the pulsed-light is, for example, a laser pulse. The pulsed-light that is output from the light source 14 provided in the distance measurement apparatus 10 and is emitted to the outside of the distance measurement apparatus 10 through the transmissive member 20 is reflected by the object, and at least a part thereof returns toward the distance measurement apparatus 10. Then, the reflection light passes through the transmissive member 20 again, and is incident into the distance measurement apparatus 10. The reflection light incident into the distance measurement apparatus 10 is received by the light receiving unit 180 and an intensity thereof is detected. The light receiving unit 180 includes a light receiving element 18 and a detection circuit 181. Here, the distance measurement apparatus 10 measures a time from when pulsed-light is emitted from the light source 14 to when reflection light is detected by the light receiving unit 180. Then, a control unit 120 provided in the distance measurement apparatus 10 calculates a distance between the distance measurement apparatus 10 and the object by using the measured time and a propagation speed of the pulsed-light. The distance measurement apparatus 10 is, for example, a laser imaging detection and ranging or laser illuminated detection and ranging (LIDAR) device or a light detection and ranging (LiDAR) device.

The light source 14 emits pulsed-light. The light source 14 is, for example, a laser diode. The light receiving element 18 receives the pulsed-light incident onto the distance measurement apparatus 10 and the internal reflection light described above. The light receiving element 18 is a photodiode such as an avalanche photodiode (APD), for example. In the present embodiment, an example is described in which the light receiving element 18 serves as both a light receiving element for receiving the internal reflection light to generate distance measurement property information and a light receiving element for receiving the reflection light from the target object 30 for distance measurement. Meanwhile, the light receiving element for receiving the internal reflection light to determine the attached-matter and the light receiving element for receiving the reflection light from the target object 30 for distance measurement may be separately provided.

In the example of Fig. 3, the distance measurement apparatus 10 further includes a movable mirror 16. The movable mirror 16 is, for example, a uniaxially movable or biaxially movable MEMS mirror. By changing a direction of a reflecting surface of the movable mirror 16, an emission direction of pulsed-light emitted from the distance measurement apparatus 10 can be changed. In a case where the movable mirror 16 is a biaxially movable MEMS mirror, a raster scan can be performed within a predetermined range with the pulsed-light by biaxially driving the movable mirror 16.

The control unit 120 generates point group data including measurement results using a plurality of pulsed-light beams. For example, in a case where a raster scan is performed within the scanning range 160, the linear scan is performed by changing the emission direction of light to a first direction 161. The point group data including a plurality of measurement results within the scanning range 160 can be generated by performing a plurality of linear scans while changing the emission direction of light to a second direction 162. In the example of this diagram, the first direction 161 and the second direction 162 are orthogonal to each other.

A unit of the point group data generated by one raster scan is called a frame. After the measurement for one frame is completed, the emission direction of light returns to an initial position, and the measurement for the next frame is performed. In this manner, frames are repeatedly generated. In the point group data, a distance measured by using pulsed-light is associated with information indicating the emission direction of the pulsed-light. Alternatively, the point group data may include three-dimensional coordinates indicating a reflection point of the pulsed-light. The control unit 120 generates the point group data by using the calculated distance and information indicating an angle of the movable mirror 16 when emitting each pulsed-light. The generated point group data may be output to the outside of the distance measurement apparatus 10, or may be held in a storage device accessible by the control unit 120.

In the example of this diagram, the distance measurement apparatus 10 further includes a perforated mirror 15 and a condenser lens 13. The pulsed-light output from the light source 14 passes through a hole of the perforated mirror 15, is reflected by the movable mirror 16, and then is emitted from the distance measurement apparatus 10. In addition, reflection light incident onto the distance measurement apparatus 10 is reflected by the movable mirror 16 and the perforated mirror 15, and then is incident onto the light receiving unit 180 through the condenser lens 13. The distance measurement apparatus 10 may further include a collimating lens, a mirror, and the like.

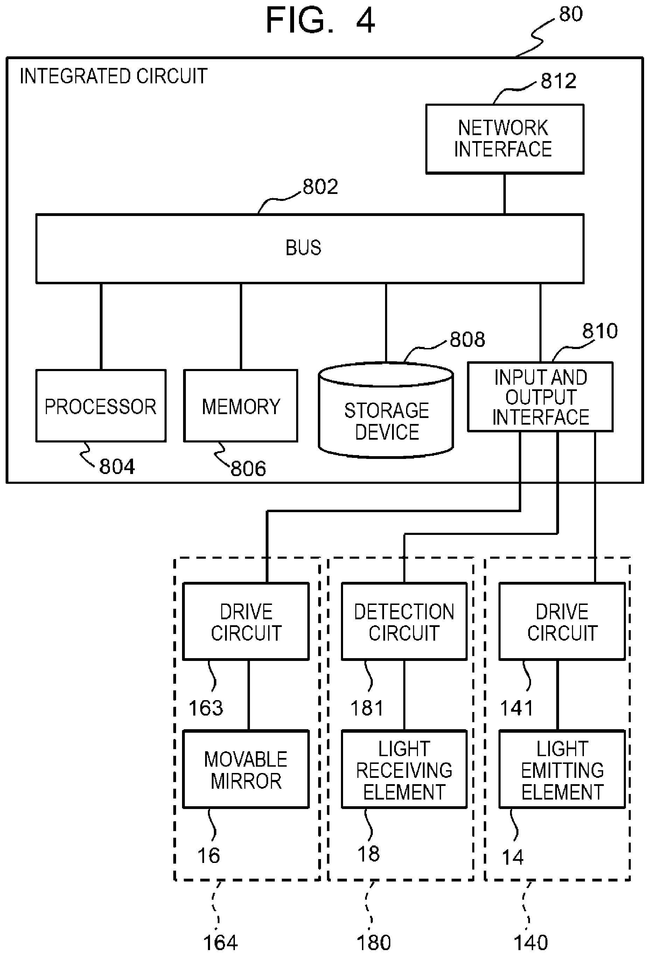

The control unit 120 can control a light emitting unit 140, the light receiving unit 180, and a movable reflection unit 164 (see Fig. 4). The light emitting unit 140 includes the light source 14 and a drive circuit 141. The movable reflection unit 164 includes the movable mirror 16 and a drive circuit 163. The drive circuit 141 is a circuit for causing the light source 14 to emit light based on a control signal from an integrated circuit 80 and includes, for example, a switching circuit or a capacitance element. The detection circuit 181 includes an I-V converter or an amplifier and outputs a signal indicating a detected intensity of light by the light receiving element 18. The control unit 120 acquires a reception light signal from the light receiving unit 180 and calculates a distance from the distance measurement apparatus 10 to the object within the scanning range 160 as described above. In addition, the information generation unit 121 also acquires a reception light signal from the light receiving unit 180 and uses the reception light signal for generating distance measurement positive information.

Fig. 4 is a diagram illustrating a hardware configuration of the control unit 120 and the information generation unit 121 according to the present embodiment. The control unit 120 and the information generation unit 121 are implemented by using the integrated circuit 80. The integrated circuit 80 is, for example, a system on chip (SoC).

The integrated circuit 80 includes a bus 802, a processor 804, a memory 806, a storage device 808, an input and output interface 810, and a network interface 812. The bus 802 is a data transmission path for the processor 804, the memory 806, the storage device 808, the input and output interface 810, and the network interface 812 to transmit and receive data to and from each other. Meanwhile, a method of mutually connecting the processor 804 and the like is not limited to bus connection. The processor 804 is an arithmetic processing device implemented by using a microprocessor or the like. The memory 806 is a memory implemented by using a random access memory (RAM) or the like. The storage device 808 is a storage device implemented by using a read only memory (ROM), a flash memory, or the like.

The input and output interface 810 is an interface for connecting the integrated circuit 80 to peripheral devices. In this diagram, the drive circuit 141 of the light source 14, the detection circuit 181 of the light receiving element 18, and the drive circuit 163 of the movable mirror 16 are connected to the input and output interface 810.

The network interface 812 is an interface for connecting the integrated circuit 80 to a communication network. This communication network is a communication network such as a controller area network (CAN), Ethernet, and low voltage differential signaling (LVDS), for example. A method of connecting the network interface 812 to the communication network may be a wireless connection or a wired connection.

The storage device 808 stores program modules for implementing the functions of the control unit 120 and the information generation unit 121. The processor 804 implements the functions of the control unit 120 and the information generation unit 121 by reading the program modules into the memory 806 and executing the program modules.

A hardware configuration of the integrated circuit 80 is not limited to the configuration illustrated in this diagram. For example, the program modules may be stored in the memory 806. In this case, the integrated circuit 80 may not include the storage device 808.

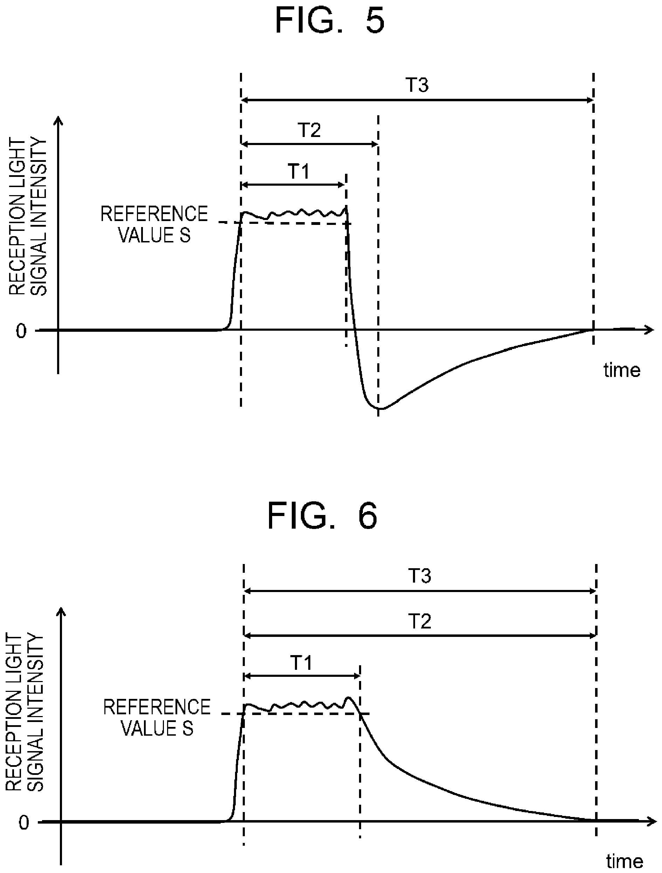

Figs. 5 and 6 are diagrams illustrating reception light signal waveforms of internal reflection light in a case where an attached-matter occurs at the transmissive member 20. The information generation unit 121 can specify, for example, a waveform within a predetermined time from emission of light of the reception light signal by the light receiving unit 180, as the waveform of the internal reflection light. Alternatively, the information generation unit 121 may regard pulsed-light, which is first received after the pulsed-light is emitted, as the internal reflection light. This is because the internal reflection light is a reflection from a certain short distance. The reception light signal waveform of the internal reflection light differs depending on a type of the attached-matter, such as moisture, oil, dust, or dirt. The information generation unit 121 generates distance measurement property information by using a feature of the reception light signal waveform. In addition, as described above, the distance measurement apparatus 10 sequentially emits a plurality of light beams to perform distance measurement. Further, the information generation unit 121 generates distance measurement property information for each emission of light. Hereinafter, generation of the distance measurement property information will be described in detail.

### <Internal Reflection Light Intensity>

As an example, the information generation unit 121 can generate distance measurement property information by using an intensity of internal reflection light in a light reception result. In a case where there is an attached-matter, the intensity of the internal reflection light is increased by reflecting at the attached-matter. In addition, in a case where the reception light intensity is particularly high, a detection range of the light receiving unit 180 is exceeded, and as illustrated in Fig. 5 or Fig. 6, the reception light signal may be saturated. At a position at which the attached-matter exists, reflection light from the target object 30 is also attenuated, and thus a distance measurement property deteriorates. Therefore, it can be said that, as the intensity of the internal reflection light is increased, the distance measurement performance deteriorates. The information generation unit 121 specifies the maximum intensity in the reception light signal of the internal reflection light as the intensity of the internal reflection light for each emission light, and uses the maximum intensity for generating distance measurement property information.

### <Saturation Time>

The information generation unit 121 can generate distance measurement property information by using, for example, a length of a time related to saturation of the light receiving unit 180 by internal reflection light. As an example, in a case where an attached-matter is moisture, a waveform is affected by saturation over a long period of time. The light receiving unit 180 receives reflection light from the target object 30, subsequently to the reception of the internal reflection light. Meanwhile, in a case where the light receiving unit 180 is affected by saturation for a long period of time, the reception of the reflection light from the target object 30 may also be affected. For example, if the reflection light from the target object 30 is incident onto the light receiving element 18 before the reception light signal returns to a reference level after saturation, a peak is not accurately detected, in some cases. In this manner, a distance to the target object 30 cannot be correctly calculated. Therefore, it can be said that, as the length of the time related to saturation is increased, the distance measurement performance tends to deteriorate.

Examples of the length of the time related to saturation, which can be used for the determination, include times T1, T2, and T3 illustrated in Fig. 5 and Fig. 6, for example. Hereinafter, the length of the time related to saturation is also simply referred to as a "saturation time". The saturation time is at least one of the times T1, T2, and T3. The information generation unit 121 may use only one of the times T1, T2, and T3, or may use two or more of the times T1, T2, and T3 in combination. Each of the times T1, T2, and T3 will be described in detail below.

The time T1 is a length of a time during which the light receiving unit 180 is saturated. The information generation unit 121 determines a state in which a reception light signal output from the light receiving unit 180 exceeds a predetermined reference value S as a state in which the light receiving unit 180 is saturated, and measures the time T1. The reference value S is, for example, slightly smaller than a saturation level of the light receiving element. Here, the saturation level means the maximum amount of reception light that can be detected without saturating the light receiving unit 180.

The time T2 is a length of a time from a time point when the saturation is started as a start point to a time point when a slope becomes zero for the first time after the saturation as an end point, in the output waveform from the light receiving unit 180. The information generation unit 121 sets a time point when the reception light signal output by the light receiving unit 180 exceeds the reference value S described above after pulsed-light is emitted, as the time point when the saturation is started. Further, the information generation unit 121 measures the time T2 by calculating the slope at each point of the waveform and detecting a time point when the calculated slope becomes zero.

The time T3 is a length of a time when a time point when the saturation is started as a start point to an earlier time point between a time point of second zero-crossing after the saturation or a time point of first convergence after the saturation, in the output waveform of the light receiving unit 180. The information generation unit 121 sets a time point when the reception light signal output by the light receiving unit 180 exceeds the reference value S described above after pulsed-light is emitted, as the time point when the saturation is started. In addition, the information generation unit 121 detects a time point of zero-crossing of the reception light signal and specifies a time point of the second zero-crossing of the reception light signal after the saturation. Further, the information generation unit 121 determines that a case where a state in which a signal value is within a predetermined convergence level range is continued for a predetermined length is a converging state. In a case where it is determined that the converging state has occurred, a time point when that state is started, that is, a time point when the signal value changes from outside the convergence level range to within the convergence level range, is specified as the time point of the first convergence after the saturation. The convergence level range is a range including zero in between, an upper limit of the convergence level range is slightly greater than zero, and a lower limit of the convergence level range is slightly less than zero. Meanwhile, a difference between the upper limit of the convergence level range and zero can be made greater than a difference between the lower limit of the convergence level range and zero. This is because, for example, in a case where ambient light is incident onto the distance measurement apparatus 10, the reception light signal may converge to a level greater than zero by the amount of ambient light.

The information generation unit 121 measures the time T3 by selecting the earlier time point between the time point of the second zero-crossing after the saturation and the time point of the first convergence after the saturation. Either the time point of the second zero-crossing after the saturation or the time point of the first convergence after the saturation may not be present. In that case, the information generation unit 121 sets a time point that can be specified between the time point of the second zero-crossing after the saturation and the time point of the first convergence after the saturation, as the end point of T3. In the example of Fig. 6, T2 and T3 are the same.

The end point of the time T3 may be a first time point when the reception light signal is within the convergence level range and the slope of the reception light signal is within a predetermined range including zero, after the end of the saturation state.

Even in a state in which there is no attached-matter, a certain amount of internal reflection light is generated. Therefore, it is preferable that the information generation unit 121 generates distance measurement property information by using the amount of change from an initial value, for an intensity of the internal reflection light and a saturation time. By doing so, the influence of the attached-matter can be specified more accurately. As the initial value, a value measured in a state in which there is no attached-matter at the transmissive member 20, for example, in a state during shipping can be used.

### <Position in Object>

For example, the information generation unit 121 can determine an object region corresponding to a region in which an attached-matter exists in the transmissive member 20, by using a distribution of a light reception result of internal reflection light for a plurality of emission directions of light, and generate distance measurement property information based on a position in the object region.

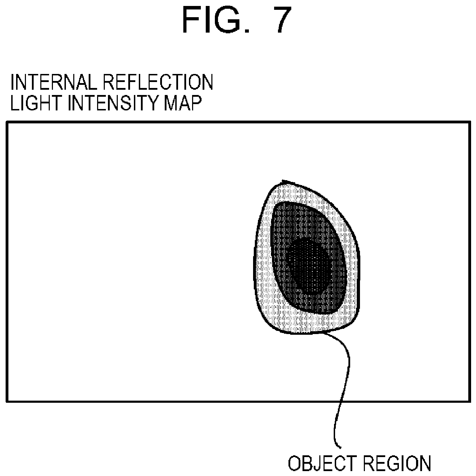

Fig. 7 is a diagram schematically illustrating a distribution of an internal reflection light intensity in a frame. The information generation unit 121 can generate such an internal reflection light intensity map by using the internal reflection light intensity corresponding to a plurality of emission directions. As described above, the internal reflection light intensity used here is preferably the amount of change from an initial value. From the internal reflection light intensity map, it is possible to specify a region in which an attached-matter occurs within a scanning range. Specifically, the information generation unit 121 determines a region, in which the internal reflection light intensity is equal to or more than a predetermined value, in the internal reflection light intensity map, as the object region.

A distance measurement property of the distance measurement apparatus 10 also depends on a relationship between the position of the attached-matter and the emission direction. For example, light emitted in a direction of a center of the attached-matter is more influenced by the attached-matter than light emitted in a direction near an edge of the attached-matter. That is, the influence on the distance measurement property is also increased. Therefore, the information generation unit 121 can generate the distance measurement property information based on the position in the object region. Specifically, the information generation unit 121 calculates the shortest distance from an outer edge of the object region, for each point (emission direction) in the determined object region. As the shortest distance becomes longer, the point is close to a center of the object region and the distance measurement property tends to deteriorate. For a point outside the object region, a sufficiently large predetermined value is set as the shortest distance.

The information generation unit 121 may generate a saturation time map by using a saturation time corresponding to the plurality of emission directions or the amount of change from the initial value of the saturation time, instead of the internal reflection light intensity map, and use the saturation time map for the specifying of the object region.

The information generation unit 121 according to the present embodiment performs determination on a rule-based basis using the light reception result of the internal reflection light, and generates the distance measurement property information. Whenever the measurement of one frame is completed, the information generation unit 121 performs the following process and generates the distance measurement property information for each measurement point in the frame. In a case where it is not necessary to determine the object region for generating the distance measurement property information, the information generation unit 121 may generate the distance measurement property information for each emission of light.

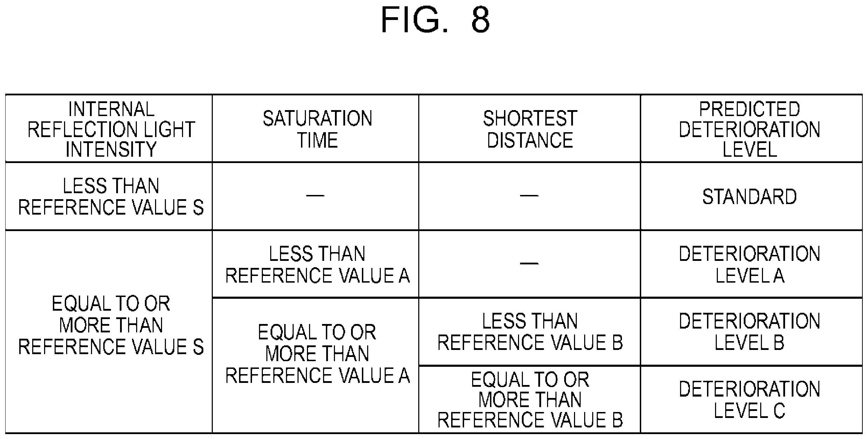

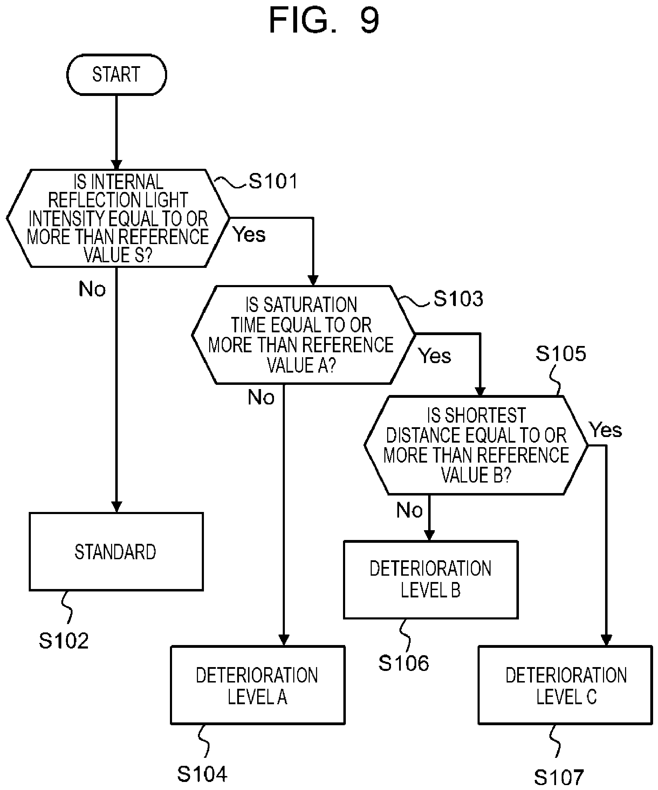

Fig. 8 is a table illustrating a determination rule for generating distance measurement property information from a light reception result of internal reflection light. Fig. 9 is a flowchart illustrating a flow of determination by the information generation unit 121 in a case where the determination rule of Fig. 8 is used. In the example of this diagram, the information generation unit 121 generates the distance measurement property information by using an internal reflection light intensity, a saturation time, and the shortest distance from an outer edge of an object region. In the example of this diagram, the information generation unit 121 generates a predicted deterioration level as the distance measurement property information. In the example of this diagram, the degree of deterioration is grater in the order of "deterioration level C", "deterioration level B", and "deterioration level A". That is, it is indicated that, among the "deterioration level A", the "deterioration level B", and the "deterioration level C", the "deterioration level C" has the highest degree of deterioration, the "deterioration level B" has the next highest degree of deterioration after the "deterioration level C", and the "deterioration level A" has the next highest degree of deterioration after the "deterioration level B". In addition, "standard" indicates that a distance measurement performance is the same as a distance measurement performance of an initial state.

First, the information generation unit 121 determines whether or not an internal reflection light intensity of a point as a determination target is equal to or more than the reference value S (S101). In a case where the internal reflection light intensity is not equal to or more than the reference value S (No in S101), the information generation unit 121 determines that a predicted deterioration level at that point is "standard" (S102). In a case where the internal reflection light intensity is equal to or more than the reference value S (Yes in S101), the information generation unit 121 then determines whether or not a saturation time of the point as a determination target is equal to or more than a reference value A (S103). In a case where the saturation time is not equal to or more than the reference value A (No in S103), the information generation unit 121 determines the predicted deterioration level at that point as the "deterioration level A" (S104). In a case where the saturation time is equal to or more than the reference value A (Yes in S103), the information generation unit 121 then determines whether or not the shortest distance from an outer edge of an object region of the point as a determination target is equal to or more than a reference value B (S105). In a case where the shortest distance is not equal to or more than the reference value B (No in S105), the information generation unit 121 determines the predicted deterioration level at that point as the "deterioration level B" (S106). In a case where the shortest distance is not equal to or more than the reference value B (Yes in S105), the information generation unit 121 determines the predicted deterioration level at that point as the "deterioration level C" (S107). In this manner, the information generation unit 121 can determine the deterioration level on a rule-based basis.

In addition, the information generation unit 121 may generate information on a distance measurement property by using a determination rule provided for each configuration of an optical system of the distance measurement apparatus 10. Since an influence of an attached-matter on the distance measurement property differs depending on the configuration of the optical system, it is preferable to use an appropriate determination rule for each configuration. The influence on the distance measurement property differs depending on the configuration of the optical system will be described below.

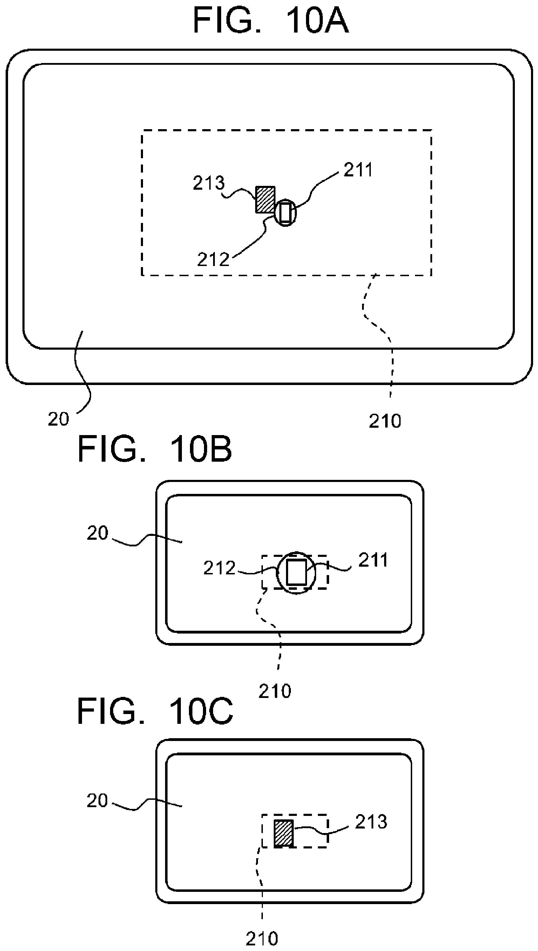

Fig. 10A is a diagram schematically illustrating the transmissive member 20 of the distance measurement apparatus 10 to which a telephoto lens is not attached, and Figs. 10B and 10C are diagrams schematically illustrating the transmissive member 20 of the distance measurement apparatus 10 to which the telephoto lens is attached. In Figs. 10A to 10C, a broken line rectangle 210 indicates an effective scanning area, a solid line rectangle 211 indicates a spot shape and a spot size of light emitted from the distance measurement apparatus 10 in the transmissive member 20, and an ellipse 212 indicates a shape and a size of a light reception spot in the transmissive member 20. The effective scanning area is a region through which the emitted light can pass in the transmissive member 20 when scanning is performed for generating one frame. The light reception spot is a region in which light which is emitted from the distance measurement apparatus 10, reflected by the target object 30, and then incident onto the distance measurement apparatus 10 can be received. As can be seen from Figs. 10A and 10B, the size of the spot of light with respect to the effective scanning area differs greatly depending on the presence or absence of the telephoto lens.

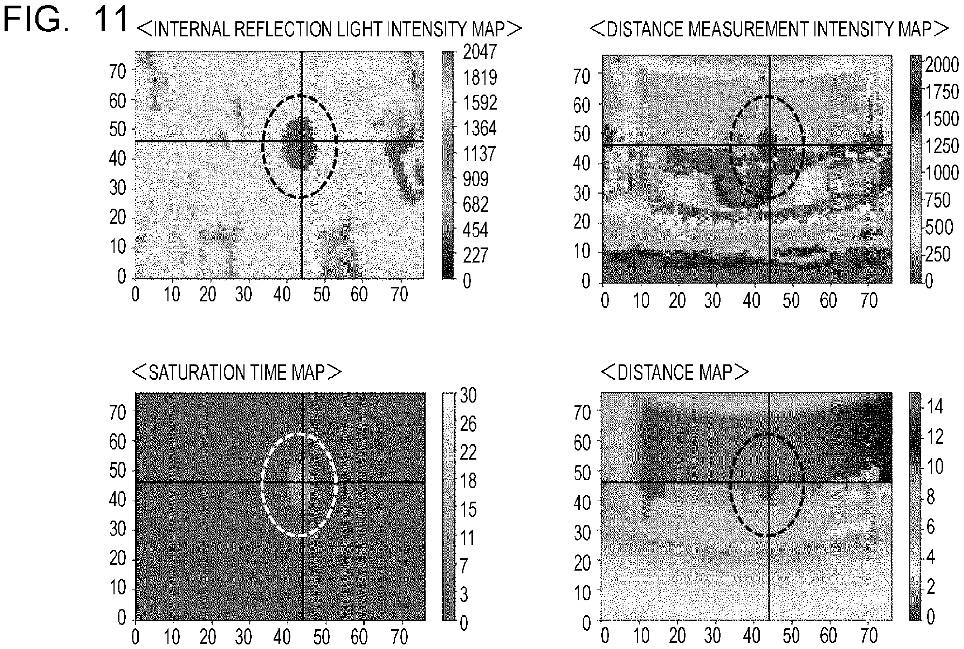

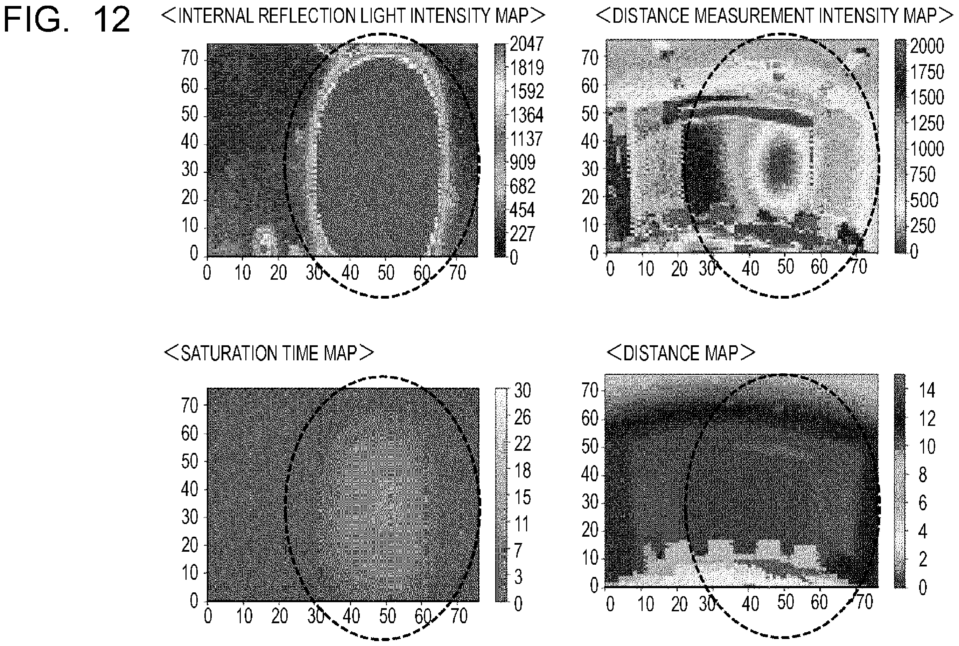

Fig. 11 is a diagram illustrating a result of measurement in a state in which an attached-matter is attached to the transmissive member 20 of the distance measurement apparatus 10 to which a telephoto lens is not attached. Fig. 12 is a diagram illustrating a result of measurement in a state in which an attached-matter is attached to the transmissive member 20 of the distance measurement apparatus 10 to which the telephoto lens is attached. Figs. 10A and 10C illustrate a size and a shape of an attached-matter 213 at this time. Figs. 11 and 12 respectively illustrate an internal reflection light intensity map, a saturation time map, a distance measurement intensity map, and a distance map obtained in the same frame. The internal reflection light intensity map and the saturation time map are as described above. The distance measurement intensity map is a map indicating a distribution of a peak intensity of reception light signal when reflection light from the target object 30 is received. The distance map is a map indicating a distribution of a distance to the target object 30 calculated by receiving the reflection light from the target object 30. In each map, there is a region corresponding to an attached-matter inside a broken line ellipse. A size of the attached-matter attached to the transmissive member 20 is the same in Figs. 11 and 12. For example, raindrops, dust, insects, snow, and the like are assumed as attached-matters that are expected in a case where the distance measurement apparatus 10 is used outdoors, and a size thereof is approximately several mm. Assuming this size, the size of the attached-matter used at a time of the measurement in Figs. 11 and 12 is 2 mm x 3 mm.

As illustrated in Fig. 11, in the distance measurement apparatus 10 to which the telephoto lens is not attached, the influence of the attached-matter appears in a shape close to an actual shape in the internal reflection light intensity map and the saturation time map. In addition, in the distance measurement intensity map and the distance map, it appears that the distance measurement cannot be performed in a region in which the attached-matter exists.

On the other hand, as illustrated in Fig. 12, in the distance measurement apparatus 10 to which the telephoto lens is attached, the influence appears in a large region with respect to a frame in the internal reflection light intensity map. This is due to the large size of the attached-matter with respect to the effective scanning area. In the saturation time map, the influence is decreased from a center toward an outer edge of an object region. In addition, although a strong influence is seen at the center of the object region in the distance measurement intensity map, there are many portions in which the influence does not appear in the distance map, and it is understood that the distance measurement can be performed over the entire frame. This is considered to be due to a fact that the light spot and the attached-matter have similar sizes.

In this manner, the influence of the attached-matter on the distance measurement property differs depending on a configuration of an optical system, so that it is preferable that different determination rules are set for each configuration and used for generating the distance measurement property information. The information generation unit 121, for example, acquires information indicating the configuration of the optical system, which is input to 10 in advance, and reads a determination rule corresponding to the configuration from a storage unit and uses the determination rule. In each map as illustrated in Figs. 11 and 12, an image is distorted due to an effect of an orbit of the movable mirror 16 and an optical lens. Since such distortion is known, a process of correcting each map by using a predetermined correction parameter may be performed. In this case, an outer shape of the map may not be a rectangle. Alternatively, a process of correcting the distortion of the projected target object or the like may be performed while the outer shape of the map is maintained as a rectangle. The same applies to a deterioration map to be described below.

If distance measurement property information for each emission direction of light is generated, the information generation unit 121 may generate a distance measurement property map indicating a distribution of the distance measurement property information. In addition, the distance measurement apparatus 10 may generate and output display data for image-displaying the generated distance measurement property map. The distance measurement apparatus 10 can display the distance measurement property map by outputting the display data to a display. The distance measurement apparatus 10 may hold the generated distance measurement property information in a storage unit which is accessible from the distance measurement apparatus 10. The storage unit may or may not be included in the distance measurement apparatus 10.

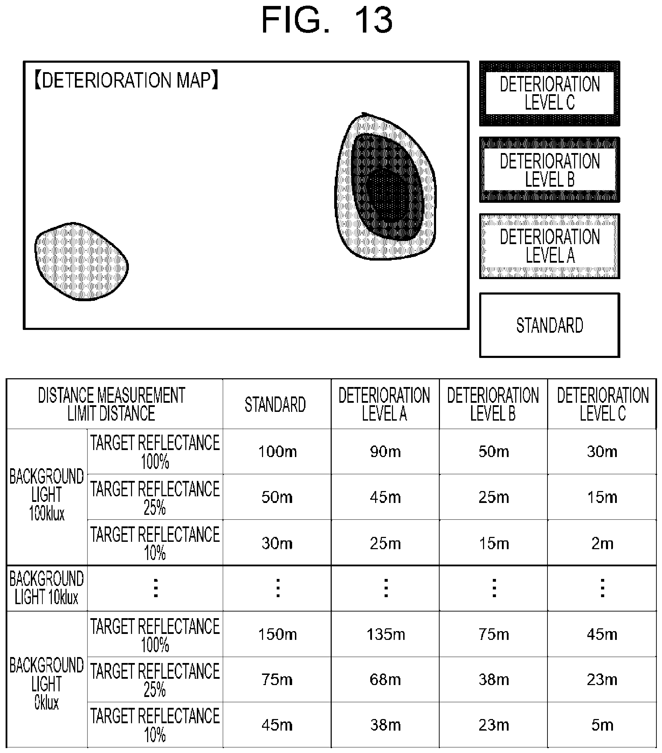

Fig. 13 is a diagram illustrating an image in which a distance measurement property map is displayed. In the image of this diagram, a deterioration map of a distance measurement performance is displayed as the distance measurement property map. In addition, a table illustrating a distance measurement limit distance to which each deterioration level corresponds under a plurality of conditions is also displayed. Such a table can be prepared by previously experimental measurement and held in a storage unit. For example, in the present example, it is understood that a limit distance at which a target (target object) having a reflectance of 100% can be measured in a state in which background light is 100 k lux is 30 m in a region of the deterioration level C in a frame. In a case where the distance measurement property map is displayed in this manner, for example, it is possible to check whether or not a necessary distance measurement performance is satisfied or to determine whether or not the transmissive member 20 needs to be cleaned.

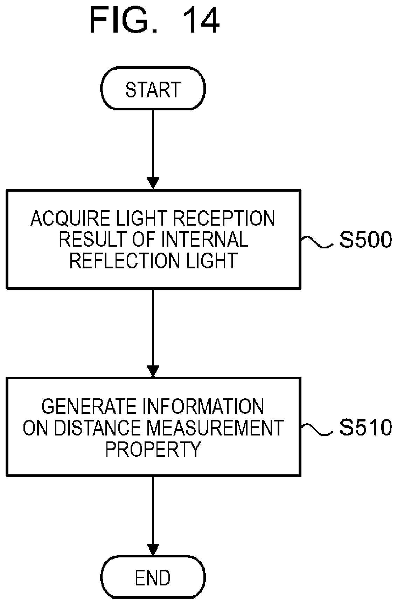

Fig. 14 is a flowchart illustrating a flow of an information generation method according to the present embodiment. The information generation method according to the present embodiment is an information generation method that is executed by a computer to generate distance measurement property information of the distance measurement apparatus 10 that emits light output from a light source through a transmissive member and detects reflection light from a target. In the present method, a light reception result of internal reflection light by the light receiving unit that receives at least the internal reflection light including the reflection light reflected by the transmissive member 20 is acquired (S500). Then, the distance measurement property information of the distance measurement apparatus 10 is generated by using the light reception result of the internal reflection light (S510).

As described above, with the present embodiment, the information generation unit 121 generates the distance measurement property information of the distance measurement apparatus 10 by using the light reception result of the internal reflection light by the light receiving unit 180. Therefore, it is possible to specify an influence of an attached-matter formed on an emission window of the distance measurement apparatus, on the distance measurement property, and to check whether or not a necessary distance measurement performance by a user is satisfied or to take necessary measures.

### (Second Embodiment)

The distance measurement apparatus 10 according to a second embodiment is the same as the distance measurement apparatus 10 according to the first embodiment, except that the information generation unit 121 generates distance measurement property information by using a trained model 40 based on machine learning. Details will be described below.

In the present embodiment, the information generation unit 121 generates distance measurement property information from a light reception result of internal reflection light by using the model 40, instead of using a determination rule. The model 40 is, for example, a model to which a light reception result of the internal reflection light is to be input and from which the distance measurement property information is to be output.

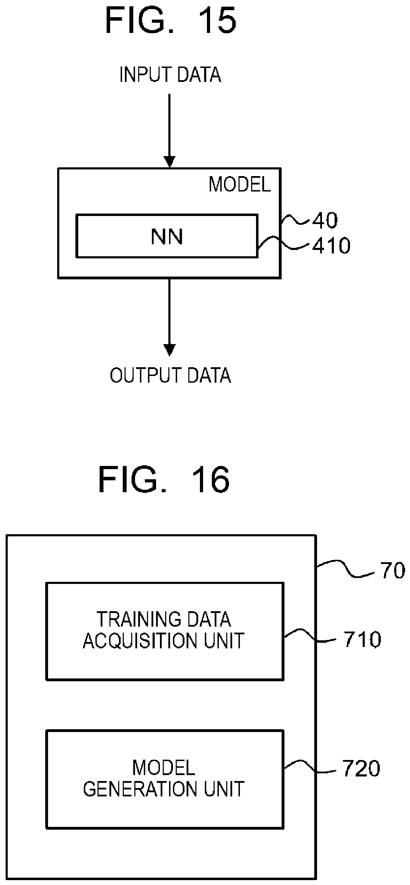

Fig. 15 is a diagram illustrating the trained model 40 used by the information generation unit 121 according to the second embodiment. The information generation unit 121 according to the present embodiment reads and acquires the trained model 40 from a storage unit which is accessible by the information generation unit 121. The information generation unit 121 inputs input data to the model 40 and obtains output data of the model 40. The input data input to the model 40 may be a reception light waveform of internal reflection light, or may be a numerical value such as an internal reflection light intensity, a saturation time, and the shortest distance from an outer edge of an object region, or a vector including the above. Further, the input data of the model 40 may include, for example, an internal reflection intensity map or a saturation time map. The output data of the model 40 is, for example, a predicted deterioration level of each point in a frame. The output data may be a map such as a deterioration map. The input data and the output data of the model 40 may be in units of measurement point or in units of frame.

The input data of the model 40 may further include information indicating a configuration of the distance measurement apparatus 10 when receiving the light reception result. The configuration of the distance measurement apparatus 10 includes, for example, a configuration of an optical system. Alternatively, the model 40 may be provided for each configuration of the distance measurement apparatus 10. In this case, the information generation unit 121 may acquire information indicating the configuration of the distance measurement apparatus 10 and read the model 40 corresponding to the configuration from the storage unit and use the model.

The trained model 40 includes a neural network 410. The trained model 40 is a model that is trained through machine learning in advance by using a plurality of pieces of training data.

The information generation unit 121 can improve accuracy of distance measurement property information by using the model 40 in this manner. The information generation unit 121 may generate the distance measurement property information by combining the rule-based determination as described in the first embodiment and the determination using the model 40.

### <Model Generation Apparatus>

Fig. 16 is a block diagram illustrating a functional configuration of an apparatus that generates a model. A model generation apparatus 70 includes a training data acquisition unit 710 and a model generation unit 720. The training data acquisition unit 710 acquires training data in which a light reception result of internal reflection light and distance measurement property information of a distance measurement apparatus are associated. The light reception result of the internal reflection light is a light reception result of internal reflection light including reflection light reflected by the transmissive member 20 in a distance measurement apparatus that emits light output from the light source 14 through the transmissive member 20 and detects reflection light from a target object. The model generation unit 720 generates, by performing machine learning with the training data, the model 40 to which the light reception result of the internal reflection light is to be input and from which the distance measurement property information is to be output.

A plurality of pieces of training data can be prepared by previously experimental measurement and held in a storage unit. The training data acquisition unit 710 acquires training data by, for example, reading the training data from the storage unit.

With the present embodiment, the same operations and effects as in the first embodiment can be obtained.

### (Third Embodiment)

The distance measurement apparatus 10 according to a third embodiment is the same as the distance measurement apparatus 10 according to at least one of the first and second embodiments, except that the control unit 120 performs control by using distance measurement property information. In the present embodiment, the control unit 120 controls at least one of an output intensity of the light source 14 and a multiplication factor of the light receiving unit 180, based on the distance measurement property information. Details will be described below.

If a distance measurement property map is generated for a certain frame, the control unit 120 performs control based on the generated distance measurement property map when performing measurement on a subsequent frame. Specifically, when the measurement is performed in a certain emission direction, the control unit 120 specifies distance measurement property information of the emission direction with reference to the distance measurement property map. At least one of the output intensity of the light source 14 and the multiplication factor of the light receiving unit 180 is controlled based on the specified distance measurement property information. For example, the information generation unit 121 increases the output intensity of the light source 14 as the degree of deterioration indicated in the distance measurement property information is increased. By doing so, it is possible to output light having a sufficient intensity from the distance measurement apparatus 10 even if the light is attenuated by an attached-matter. Alternatively, the information generation unit 121 increases the multiplication factor of the light receiving unit 180 as the degree of deterioration indicated in the distance measurement property information is increased. By doing so, it is possible to obtain a reception light signal having a sufficient intensity even in a case where reflection light from the target object 30 is weak. For example, the control unit 120 acquires reference information from a storage unit which is accessible from the control unit 120, and uses the reference information for the control. The reference information is information in which a deterioration level and the output intensity of the light source 14 are associated with each other, or information in which the deterioration level and the multiplication factor of the light receiving unit 180 are associated with each other. The control unit 120 specifies the output intensity or the multiplication factor corresponding to the deterioration level indicated in the distance measurement property information, and controls the light source 14 or the light receiving unit 180.

With the present embodiment, the same operations and effects as in the first embodiment can be obtained. In addition, with the present embodiment, the control unit 120 controls at least one of the output intensity of the light source 14 and the multiplication factor of the light receiving unit 180 based on the distance measurement property information. Therefore, it is possible to perform appropriate distance measurement even in a case where an influence by the attached-matter exists.

### (Fourth Embodiment)

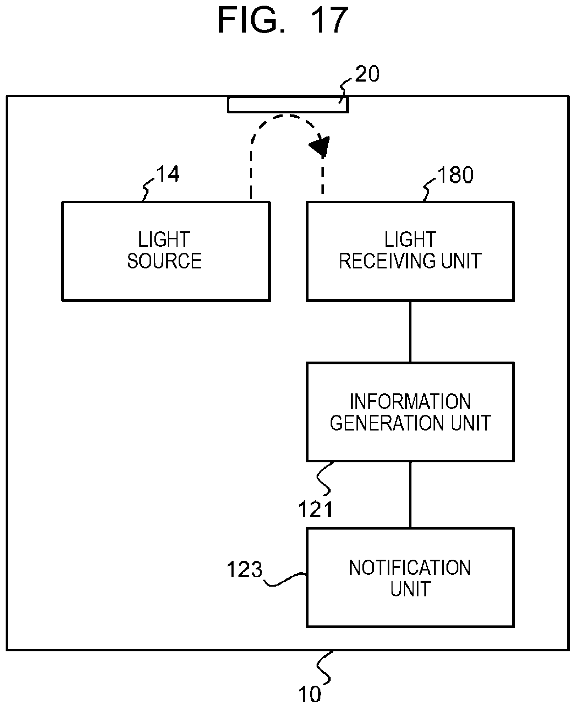

Fig. 17 is a block diagram illustrating a functional configuration of the distance measurement apparatus 10 according to a fourth embodiment. The distance measurement apparatus 10 according to the present embodiment is the same as the distance measurement apparatus 10 according to at least one of the first to third embodiments, except that a notification unit 123 that performs notification by using distance measurement property information is further provided. The notification unit 123 acquires information indicating a notification subject region in a distance measurement property map, and performs notification based on the distance measurement property information of the notification subject region. Details will be described below.

The notification is, for example, a warning indicating that a distance measurement performance deteriorates. In this case, the notification unit 123 issues a warning regarding the deterioration of the distance measurement performance in the notification subject region, while not taking distance measurement property information outside the notification subject region into consideration in the notification. That is, even in a case where the distance measurement performance deteriorates outside the notification subject region, the notification unit 123 does not perform the notification such as the warning.

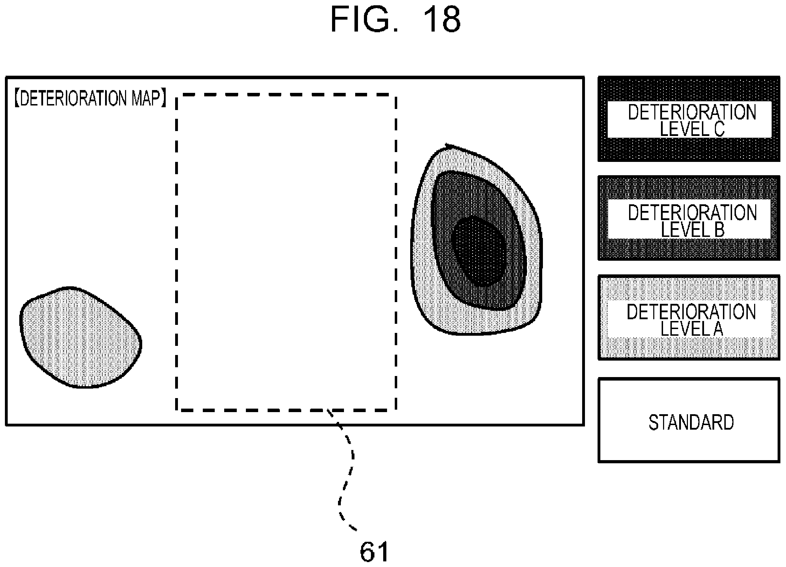

Fig. 18 is a diagram describing a notification subject region 61. A user designates the notification subject region 61 in a frame in advance with respect to the distance measurement apparatus 10 according to the present embodiment. The distance measurement apparatus 10 accepts an input for designating the notification subject region 61 from the user. The notification unit 123 acquires information indicating the notification subject region 61 input to the distance measurement apparatus 10. If a distance measurement property map is generated, the notification unit 123 acquires the distance measurement property map from the information generation unit 121. Further, the notification unit 123 determines whether or not deterioration of the distance measurement performance is seen in the notification subject region 61 of the distance measurement property map. In a case where the deterioration in the distance measurement performance is seen in the notification subject region 61, the notification unit 123 outputs a warning. On the other hand, in a case where no deterioration of the distance measurement performance is seen in the notification subject region 61, the notification unit 123 does not output the warning. The case where the deterioration of the distance measurement performance is seen in the notification subject region 61 of the distance measurement property map is, for example, a case where a predicted deterioration level of at least a part of the notification subject region 61 is not "standard". Alternatively, there is a case where the predicted deterioration level of at least a part of the notification subject region 61 is worse than a predetermined level. As illustrated in Fig. 18, the notification unit 123 does not output a warning even in a case where the deterioration in the distance measurement performance is seen outside the notification subject region 61.

A method of outputting the warning is not particularly limited, and the notification unit 123 can output the warning by, for example, a sound output or display on a display.

In addition, the user may further input a condition for outputting a warning to the distance measurement apparatus 10. The notification unit 123 acquires the condition input by the user. For example, the user sets "background light 0 lux" and "target reflectance 10%" as use environment information, and inputs a condition "distance measurement limit distance is 30 m or more" as a necessary performance condition. In a case where a condition of "having a distance measurement limit distance of 30 m or more for measurement with background light of 0 lux and target reflectance of 10%" is not satisfied in at least a part in the notification subject region 61, the notification unit 123 outputs a warning. Whether or not the set condition is satisfied can be determined, for example, by using a table as illustrated in Fig. 13, in addition to the generated distance measurement property information.

The notification unit 123 may notify that a distance measurement performance is appropriate in a case where no deterioration of the distance measurement performance is seen in the notification subject region 61, instead of outputting the warning or in addition to the output of the warning.

In the present embodiment, the storage device 808 further stores a program module for implementing the function of the notification unit 123. The processor 804 implements the function of the notification unit 123 by reading this program module into the memory 806 and executing the program module.

With the present embodiment, the same operations and effects as in the first embodiment can be obtained. In addition, with the present embodiment, the distance measurement apparatus 10 further includes the notification unit 123 that performs notification by using distance measurement property information. Therefore, the user easily recognizes deterioration or the like in the distance measurement performance.

### (Fifth Embodiment)

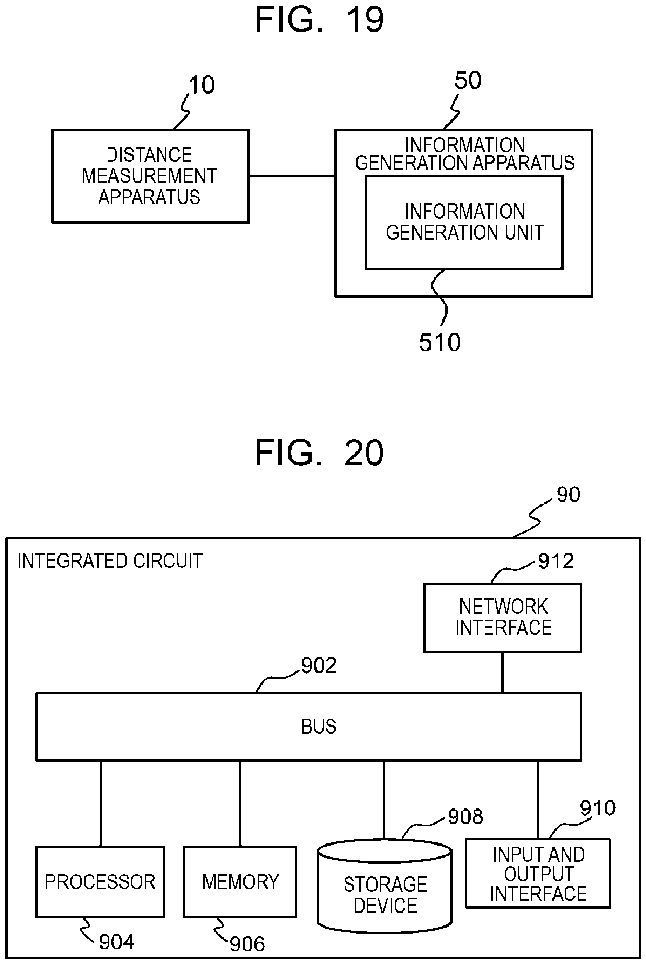

Fig. 19 is a block diagram illustrating a configuration of an information generation apparatus 50 according to a fifth embodiment. The information generation apparatus 50 according to the present embodiment generates distance measurement property information of the distance measurement apparatus 10 that emits light output from the light source 14 through the transmissive member 20 and detects reflection light from the target object 30. The information generation apparatus 50 includes an information generation unit 510. The information generation unit 510 generates the distance measurement property information of the distance measurement apparatus 10 by using a light reception result of internal reflection light by the light receiving unit 180 that receives at least the internal reflection light including reflection light reflected by the transmissive member 20. Details will be described below.

The distance measurement apparatus 10 according to the present embodiment is the same as the distance measurement apparatus 10 according to at least one of the first to third embodiments, except that the information generation unit 121 is not provided. Alternatively, the distance measurement apparatus 10 according to the present embodiment is the same as the distance measurement apparatus 10 according to the fourth embodiment, except that the information generation unit 121 and the notification unit 123 are not provided. The information generation apparatus 50 according to the present embodiment acquires information necessary for generating distance measurement property information from the distance measurement apparatus 10, and generates the distance measurement property information. The information generation apparatus 50 includes the information generation unit 510. The information generation unit 510 performs the same process as the process of the information generation unit 121 according to the first or second embodiment. The information generation apparatus 50 may further include the same notification unit as the notification unit 123 according to the fourth embodiment.

For example, the information generation apparatus 50 acquires information indicating a light reception result of internal reflection light from the distance measurement apparatus 10. Further, the information generation unit 510 generates distance measurement property information of the distance measurement apparatus 10, based on the information indicating the light reception result of the internal reflection light. The generated distance measurement property information may be output from the information generation apparatus 50 to the distance measurement apparatus 10, and used for control by the control unit 120, or may be output from the information generation apparatus 50 to a display or the like. The generated distance measurement property information may be held in a storage unit which is accessible from the information generation apparatus 50. The storage unit may be a storage unit included in the information generation apparatus 50 (for example, a storage device 908 to be described below) or a storage unit provided outside the information generation apparatus 50.

Fig. 20 is a diagram illustrating a hardware configuration of the information generation apparatus 50 according to the present embodiment. The information generation apparatus 50 is implemented by using an integrated circuit 90. The integrated circuit 90 is, for example, a system on chip (SoC).

The integrated circuit 90 includes a bus 902, a processor 904, a memory 906, a storage device 908, an input and output interface 910, and a network interface 912. The bus 902 is a data transmission path for the processor 904, the memory 906, the storage device 908, the input and output interface 910, and the network interface 912 to transmit and receive data to and from each other. Meanwhile, a method of mutually connecting the processor 904 and the like is not limited to bus connection. The processor 904 is an arithmetic processing device implemented by using a microprocessor or the like. The memory 906 is a memory implemented by using a random access memory (RAM) or the like. The storage device 908 is a storage device implemented by using a read only memory (ROM), a flash memory, or the like.

The input and output interface 910 is an interface for connecting the integrated circuit 90 to peripheral devices. The distance measurement apparatus 10 is connected to the input and output interface 910.

The network interface 912 is an interface for connecting the integrated circuit 90 to a communication network. This communication network is, for example, a controller area network (CAN) communication network. A method of connecting the network interface 912 to the communication network may be a wireless connection or a wired connection.

The storage device 908 stores a program module for implementing the function of the information generation unit 510. The processor 904 implements the function of the information generation unit 510 by reading this program module into the memory 906 and executing the program module. In addition, the storage device 908 may further store a program module for implementing the notification unit.

The hardware configuration of the integrated circuit 90 is not limited to the configuration illustrated in this diagram. For example, the program module may be stored in the memory 906. In this case, the integrated circuit 90 may not include the storage device 908.

With the present embodiment, the same operations and effects as in the first embodiment can be obtained.

As above, the embodiments and the examples are described with reference to the drawings, but these are examples of the present invention, and various other configurations other than the embodiment and the examples described above can be adopted.

The present application claims priority based on Japanese Patent Application No. 2021-187617 filed on November 18, 2021, the entire content of which is incorporated herein by reference.

### REFERENCE SIGNS LIST

10 distance measurement apparatus
13 condenser lens
14 light source
15 perforated mirror
16 movable mirror
18 light receiving element
20 transmissive member
30 target object
40 model
50 information generation apparatus
61 notification subject region
70 model generation apparatus
80 integrated circuit
90 integrated circuit
120 control unit
121 information generation unit
123 notification unit
140 light emitting unit
164 movable reflection unit
180 light receiving unit
410 neural network
510 information generation unit
710 training data acquisition unit
720 model generation unit

## Claims

1. A distance measurement apparatus that emits light output from a light source through a transmissive member and detects reflection light from a target object, the distance measurement apparatus comprising:
a light receiving unit that receives at least internal reflection light including reflection light reflected by the transmissive member; and
an information generation unit that generates information on a distance measurement property of the distance measurement apparatus by using a light reception result of the internal reflection light by the light receiving unit.

2. The distance measurement apparatus according to claim 1,
wherein the distance measurement apparatus sequentially emits a plurality of pieces of light to perform distance measurement, and
the information generation unit generates information on the distance measurement property for each emission of the light.

3. The distance measurement apparatus according to claim 2, wherein the information generation unit is configured to
generate information on the distance measurement property for each emission direction of the light, and
generate a distance measurement property map indicating a distribution of the information on the distance measurement property.

4. The distance measurement apparatus according to claim 3, further comprising:
a notification unit that performs notification by using the information on the distance measurement property,
wherein the notification unit is configured to
acquire information indicating a notification subject region in the distance measurement property map, and
not use information on the distance measurement property outside the notification subject region for the notification.

5. The distance measurement apparatus according to any one of claims 1 to 4, further comprising:
a control unit that performs control by using the information on the distance measurement property,
wherein the control unit controls at least one of an output intensity of the light source and a multiplication factor of the light receiving unit, based on the information on the distance measurement property.

6. The distance measurement apparatus according to any one of claims 1 to 5,
wherein the information generation unit generates the information on the distance measurement property by using an intensity of the internal reflection light in the light reception result.

7. The distance measurement apparatus according to any one of claims 1 to 6,
wherein the information generation unit generates the information on the distance measurement property by using a length of a time related to saturation of the light receiving unit by the internal reflection light.

8. The distance measurement apparatus according to any one of claims 1 to 7,
wherein the information generation unit is configured to
determine an object region corresponding to a region in which an attached-matter exists in the transmissive member, by using a distribution of the light reception result of the internal reflection light for a plurality of emission directions of the light, and
generate the information on the distance measurement property based on a position in the object region.

9. The distance measurement apparatus according to any one of claims 1 to 8,
wherein the information generation unit generates the information on the distance measurement property by using a trained model based on machine learning.

10. The distance measurement apparatus according to any one of claims 1 to 8,
wherein the information generation unit performs determination on a rule-based basis by using the light reception result of the internal reflection light and generates the information on the distance measurement property.

11. The distance measurement apparatus according to claim 10,
wherein the information on the distance measurement property is generated by using a determination rule provided for each configuration of an optical system of the distance measurement apparatus.

12. A model generation apparatus comprising:
a training data acquisition unit that acquires training data in which a light reception result of receiving internal reflection light including reflection light reflected by a transmissive member by a light receiving unit, in a distance measurement apparatus that emits light output from a light source through the transmissive member and detects reflection light from a target object, and information on a distance measurement property of the distance measurement apparatus are associated with each other; and
a model generation unit that generates a model to which the light reception result of the internal reflection light is to be input and from which the information on the distance measurement property is to be output, by performing machine learning with the training data.

13. An information generation apparatus that generates information on a distance measurement property of a distance measurement apparatus that emits light output from a light source through a transmissive member and detects reflection light from a target object, the information generation apparatus comprising:
an information generation unit that generates the information on the distance measurement property of the distance measurement apparatus by using a light reception result of internal reflection light including reflection light reflected by the transmissive member by a light receiving unit that receives at least the internal reflection light.

14. An information generation method that is executed by a computer to generate information on a distance measurement property of a distance measurement apparatus that emits light output from a light source through a transmissive member and detects reflection light from a target, the method comprising:
generating the information on the distance measurement property of the distance measurement apparatus by using a light reception result of internal reflection light including reflection light reflected by the transmissive member by a light receiving unit that receives at least the internal reflection light.

15. A program for causing a computer to function as:
the information generation apparatus according to claim 13.
